## Europäisches Patentamt
## European Patent Office
## Office européen des brevets

(19)

(11) Veröffentlichungsnummer: **0 157 115**
**B1**

(12) **EUROPÄISCHE PATENTSCHRIFT**

(45) Veröffentlichungstag der Patentschrift:
**26.10.88**

(51) Int. Cl.⁴: **B 23 D 77/02**

(21) Anmeldenummer: **85101141.1**

(22) Anmeldetag: **04.02.85**

(54) **Einschneiden-Reibahle.**

(30) Priorität: **20.02.84 DE 3406035**

(43) Veröffentlichungstag der Anmeldung:
**09.10.85 Patentblatt 85/41**

(45) Bekanntmachung des Hinweises auf die Patenterteilung:
**26.10.88 Patentblatt 88/43**

(84) Benannte Vertragsstaaten:
**CH FR GB LI SE**

(56) Entgegenhaltungen:
**EP - A - 0 085 156**
**DE - B - 2 614 599**
**FR - A - 1 052 315**
**US - A - 4 239 425**

(73) Patentinhaber: **MAPAL Fabrik für Präzisionswerkzeuge Dr. Kress KG, Obere Bahnstrasse 13 Postfach 1520, D-7080 Aalen (DE)**

(72) Erfinder: **Die Erfinder haben auf ihre Nennung verzichtet**

(74) Vertreter: **Gleiss, Alf-Olav, Dipl.-Ing., Auf dem Haigst 29, D-7000 Stuttgart 70 (DE)**

## Beschreibung

Die Erfindung betrifft eine Einschneiden-Reibahle der im Oberbegriff des Anspruchs 1 angegebenen Gattung. Eine derartige Reibahle ist aus der EP-A 0 085 156 bekannt.

Um bei Einschneiden-Reibahlen dieser Gattung, insbesondere wenn diese einen Mehrstufen-Messerkopf aufweisen, in Vorschubrichtung kurze und daher auch billige Messerplatten verwenden und mit genügend hoher Klemmkraft gegen die Messerkopfschulter anpressen zu können, ist es notwendig, dass die ebenfalls nur eine geringe Breite aufweisende Spannpratze vollkommen gegen Verdrehung gesichert ist, so dass ihre die Spannfläche begrenzende Kante genau parallel zur Kante der Nebenschneide verläuft. Dies ist mit Spannpratzen der üblichen, meist halbmondförmigen Bauart nicht möglich, da bei in Längsrichtung des Messerkopfes gesehen schmalen Spannpratzen auch bei aussermittiger Anordnung der Spannschraube infolge der im Verhältnis zu ihrer Breite grossen Länge der Spannpratze eine auch nur geringe durch Fertigungstoleranzen bedingte Verdrehung die Lage der Spannfläche der Spannpratze gegenüber der Messerplatte unzuträglich verändert.

Der Erfindung liegt daher die Aufgabe zugrunde, bei Einschneiden-Reibahlen der vorgenannten Gattung eine verdrehsichere Lage der Spannpratze mit konstruktiv einfachen Mitteln zu gewährleisten.

Diese Aufgabe wird gemäss der Erfindung dadurch gelöst, dass die Gattungsgemässe Spannpratze die im Kennzeichen des Anspruchs 1 angegebenen Merkmale aufweist. Vorteilhafte Ausgestaltungen der Spannpratze ergeben sich aus den Unteransprüchen.

In der Zeichnung sind zwei Ausführungsbeispiele der erfindungsgemässen Einschneiden-Reibahle in schematischer Weise dargestellt. Es zeigen

Fig. 1 eine Seitenansicht einer zwei Stufen aufweisenden Einschneiden-Reibahle,

Fig. 2 einen senkrechten Schnitt durch die Reibahle nach der Schnittlinie II–II der Fig. 1,

Fig. 3 eine Draufsicht auf die Spannpratze eines ersten Ausführungsbeispiels,

Fig. 4 eine Seitenansicht der Spannpratze nach Fig. 3,

Fig. 5 eine Draufsicht auf die Spannpratze eines zweiten Ausführungsbeispiels,

Fig. 6 eine Seitenansicht der Spannpratze nach Fig. 5.

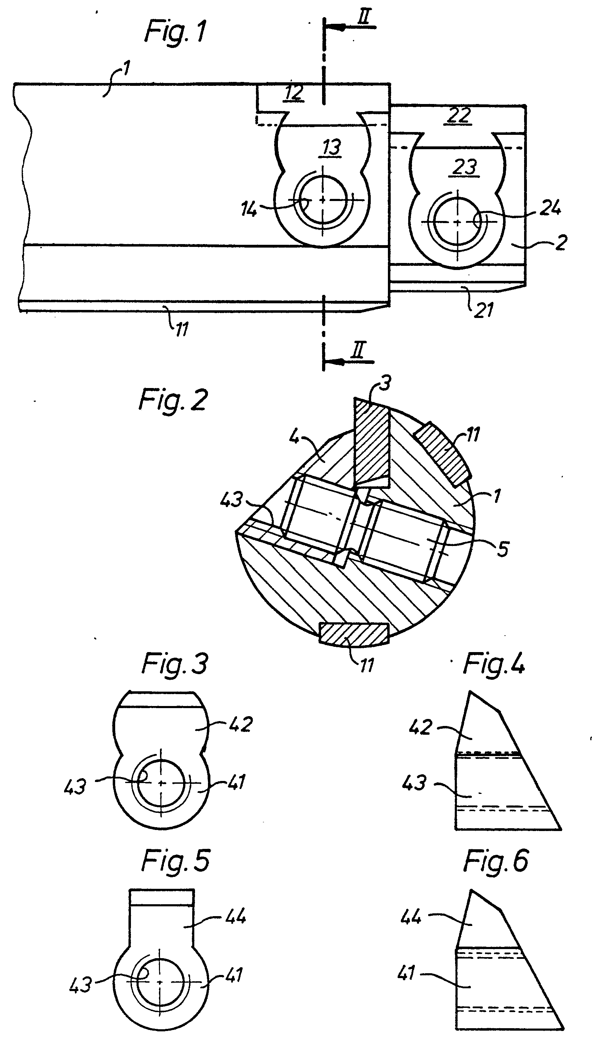

Der in Fig. 1 ohne Messerplatten und Spannpratzen gezeichnete Messerkopf weist einen schaftseitigen Teil 1 und einen vorderten Teil 2 mit gegenüber dem Teil 1 kleinerem Durchmesser auf. Am Umfang des Messerkopfes sind Führungsleisten 11 und 21 angeordnet. Der Messerkopf weist an seinem Umfang Aussparungen 12 und 22 zur Bildung von Schultern auf, gegen die Messerplatten 3 von Spannpratzen 4 angepresst werden. Im Messerkopf sind des weiteren Aussparungen 13 und 23 zur Aufnahme der Spannpratzen 4 sowie Gewindebohrungen 14 und 24 zur Aufnahme der Spannschrauben 5 vorgesehen. Die in den Figuren 3 und 4 dargestellte Spannpratze wird durch zwei längs einer gedachten Sekantenfläche miteinander verbundene, zylindrische Umfangsflächen aufweisende Teile 41 und 42 gebildet, in deren Teil 41 eine Gewindebohrung 43 zur Aufnahme der Spannschraube 5 vorgesehen ist. Bei dem in den Figuren 5 und 6 dargestellten Ausführungsbeispiel der Spannpratze weist der die Spannfläche bildende Teil 44 parallel verlaufende seitliche Begrenzungsflächen auf. Durch die zylindrische Ausbildung des Teils 41 und im Falle der Spannpratze nach den Fig. 3 und 4 auch des Teils 42 der Spannpratze wird die mechanische Bearbeitung des Messerkopfes vereinfacht, da die im Messerkopf vorgesehenen Aussparungen 13 und 23 gebohrt bzw. gefräst werden können.

## Patentansprüche

1. Einschneiden-Reibahle mit einer in einer Aussparung (12, 22) des Messerkopfes angeordneten und mittels einer Spannpratze (4) gegen die so gebildete Schulter des Messerkopfes angepressten Messerplatte (3) und am Umfang des Messerkopfes angeordneten Führungsleisten (11, 21), wobei die Spannpratze (4) einen ersten, in einer Bohrung des Messerkopfes gelagerten, eine Gewindebohrung (43) zur Aufnahme einer Spannschraube (5) und eine teilzylindrische Umfangsfläche aufweisenden Teil (41) besitzt, dadurch gekennzeichnet, dass sie einen zweiten, gegen die Messerplatte (3) anliegenden, einer Verschwenkung der Spannpratze (4) entgegenwirkenden Teil (42, 44) mit einer in einer Radialebene gelegenen, mit dem ersten Teil (41) gemeinsamen Mittellinie aufweist.

2. Einschneiden-Reibahle nach Anspruch 1, dadurch gekennzeichnet, dass der gegen die Messerplatte (3) anliegende zweite Teil (42) zylindrisch gewölbte Teilumfangsflächen aufweist und mit dem ersten Teil (41) eine gemeinsame Sekantenfläche aufweist.

3. Einschneiden-Reibahle nach Anspruch 1, dadurch gekennzeichnet, dass der gegen die Messerplatte (3) anliegende, an eine Sekantenfläche des ersten Teils (41) angrenzende zweite Teil (44) parallele, senkrecht zu der Spannflächenbegrenzungskante verlaufende seitliche Begrenzungsflächen aufweist.

4. Einschneiden-Reibahle nach Anspruch 1, dadurch gekennzeichnet, dass der Messerkopf (1,2) als Mehrstufenkopf mit zwei in derselben Achsenebene angeordneten Messerplatten (3) und zwei Spannpratzen (4) ausgebildet ist.

## Claims

1. Single-edge reamer with a cutter bar (3) arranged in a recess (12, 22) of the cutter head and clamped by means of a clamping shoe (4) against the shoulder formed by the recess on the cutter head and with guide bars (11, 21) located at the circumference of the cutter head, with the clamping shoe (4) having a first part (41) with a partially cylindrical circumferential surface arranged in a bore of the cutter head and having a threaded bore (43) for receiving a tightening bolt (5), characterized in that the clamping shoe (4) has a second part (42, 44) bearing against the cutter bar (3) and preventing turning movement of the clamping shoe (4) and having in common with the first part (41) a center line located in a radial plane.

2. Single-edge reamer according to Claim 1, characterized in that the second part (42) bearing against the cutter bar (3) has partial circumferential surfaces of cylindrically rounded configuration and a secant surface in common with the first part (41).

3. Single-edge reamer according to Claim 1, characterized in that the second part (44) bearing against the cutter bar (3) and adjoining a secant surface of the first part (41) has parallel, lateral end surfaces extending perpendicularly to the edge of the clamping surface.

4. Single-edge reamer according to Claim 1, characterized in that the cutter head (1, 2) is designed as a multistage head with two cutter bars (3) arranged in the same axial plane and two clamping shoes (4).

**Revendications**

1. Alésoir à lame unique muni d'une lame (3) montée dans un évidement (12, 22) de la tête porte-lames et appuyée au moyen d'un mors de serrage (4) contre l'épaulement, ainsi formé, de la tête porte-lames et de barrettes de guidage (11, 21) montées à la périphérie de la tête porte-lames, le mors de serrage (4) comportant une première partie (41) montée dans un alésage de la tête porte-lames et présentant un trou taraudé (43), destiné à recevoir une vis de serrage (5), et une surface périphérique partiellement cylindrique, caractérisé en ce qu'il comporte une seconde partie (42, 44) qui, s'appuyant contre la lame (3) et s'opposant à une rotation du mors de serrage (4), présente avec la première partie (41) un axe central commun situé dans un plan radial.

2. Alésoir à lame unique selon la revendication 1, caractérisé en ce que la seconde partie (42) s'appuyant contre la lame (3) présente des surfaces périphériques partielles bombées cylindriquement et partage avec la première partie (41) un plan sécant commun.

3. Alésoir à lame unique selon la revendication 1, caractérisé en ce que la seconde partie (44) s'appuyant contre la lame (3) et contiguë à un plan sécant de la première partie (41) présente des faces limites latérales parallèles qui s'étendent perpendiculairement au bord limitant la surface de serrage.

4. Alésoir à lame unique selon la revendication 1, caractérisé en ce que la tête porte-lames (1, 2) est réalisée sous forme de tête étagée avec deux lames (3) montées dans le même plan axial et deux mors de serrage (4).

*Fig. 1*

*Fig. 2*

*Fig.3*

*Fig.4*

*Fig.5*

*Fig.6*